Europäisches Patentamt

European Patent Office

Office européen des brevets

(11) Publication number: **0 168 235**
**B1**

## (12) EUROPEAN PATENT SPECIFICATION

(45) Date of publication of patent specification: **12.12.90**

(21) Application number: **85304854.4**

(22) Date of filing: **08.07.85**

(51) Int. Cl.[5]: **G 01 J 5/60,** G 01 J 5/00,
G 01 J 1/04, F 23 N 5/08,
G 01 J 3/28, G 02 B 5/04

(54) Flame quality analysis.

(30) Priority: **09.07.84 US 629159**

(43) Date of publication of application:
**15.01.86 Bulletin 86/03**

(45) Publication of the grant of the patent:
**12.12.90 Bulletin 90/50**

(84) Designated Contracting States:
**DE FR GB IT SE**

(73) Proprietor: **INTERNATIONAL CONTROL
AUTOMATION FINANCE S.A.
16 Rue des Bains
Ville de Luxembourg (LU)**

(72) Inventor: **Jeffers, Larry A.
4080 Beechwood Avenue
Alliance Ohio 44601 (US)**

(74) Representative: **Cotter, Ivan John et al
D. YOUNG & CO. 10 Staple Inn
London WC1V 7RD (GB)**

(56) References cited:
**EP-A-0 152 804**

PATENT ABSTRACTS OF JAPAN, vol. 7, no. 112
(M-215)1257r, 17th May 1983 & JP-A-58-33025
PATENT ABSTRACTS OF JAPAN, vol. 8, no. 267
(M-343)1704r, 7th December 1984 & JP-A-59-137
719

(56) References cited:

SOVIET INVENTIONS ILLUSTRATED, Section
Chemical, Week 8437, 24th October 1984,
abstract no. 84-230470, Q73, Derwent
Publications Ltd., London, GB; & SU - A - 1 068
665 (SOYUZNEFTEAVTOMATIK) 29-01-1982
ELECTRONICS AND COMMUNICATIONS IN
JAPAN, vol. 67-C, no. 1, January 1984, pages
59-67, Silver Spring, US; A. HAYASHI et al.: "2-D
Image-Velocity Sensor with a pair of optical
fiber arrays"

## Description

This invention relates to flame quality analysers and to methods of analysing the quality of a flame.

The operator of a multiburner furnace gets very little information concerning the status of the combustion inside the furnace. Each burner is usually provided with a flame detector to tell whether or not the flame is burning. Even this rudimentary information is difficult and expensive to get in many cases. Individual burners are also provided with a visual observation part. These, however, are severely limited in field-of-view and require the presence of an observer at the burner. Perhaps the best information is available through side doors which provide a wide-angle view of the burners adjacent the walls. Again, an observer is required at the door so routine use of the doors is limited. However, this is the primary source of information used by a startup engineer to set the burner for "optimum combustion". An obvious limitation is that only the burners near the wall are subject to observation.

Feeling the need for more information from the furnace interior, many furnace operators have installed TV cameras that view the flames from above. During startup and at low loads these systems are helpful, although they are plagued with maintenance problems. However, at normal loads the space between the cameras and the burners is usually filled with hot radiating particles that prevent any meaningful imaging.

There is a need for a device that tells the operator how well each of the individual burners in the furnace is performing. Such a device, in addition to providing a reliable flame on/off indication, would allow the operator to achieve higher system efficiency by identifying and adjusting poorly performing burners.

Previous attempts to meet this need have not been successful. Land Instruments in England and Environmental Data Corporation in the U.S. have offered devices for the purpose of burner performance monitoring and control. These devices provide an analog output which is used to "optimise" the combustion. Unfortunately, the output of these oversimplified devices does not correlate well with other measurements of flame quality under many conditions.

Japanese Patent Application Publication No. JP—A—58 33025 (an English language abstract of which appears at Patent Abstracts of Japan, vol. 7, no. 112, (M-215) (1257), 17 May 1983) discloses a combustion controller having a flame monitoring arrangement according to the pre-characterising parts of claims 1 and 9 hereof.

According to a first aspect of the present invention there is provided a flame quality analyser as set forth in claim 1 hereof.

According to a second aspect of the invention there is provided a method of analysing the quality of a flame, the method being as set forth in claim 9 hereof.

A preferred embodiment of the present invention described hereinbelow comprises an analyser and a method for measuring characteristics of a flame. The characteristics are displayed as a graphic representation which can be used by an operator not only to determine whether a flame is on or off, but also the quality of the flame and, thus, the effectiveness of the burner generating the flame. The preferred embodiment has a light-transducing means which comprises a monochromator in conjunction with a detector having a pair of spaced-apart light-sensing arrays for generating, from the light transmitted by the optical fibres, a set of electrical signals that can be utilised to produce a display which is characteristic of one or more qualities of the flame. The monochromator divides what can be considered to be an elongate sheet of light which is provided by the optical fibres into its component wavelengths with the light-sensing arrays being positioned at two spaced locations along the wavelength for picking up light of two separate wavelengths.

The light-receiving ends can be on a line which is parallel to the axis of the burner to measure light coming from the flame at ever-increasing distances from the burner. Additionally or alternatively, the light-receiving ends can be on a line which is perpendicular to the axis for taking measurements across the width of the flame.

The preferred flame quality analyser is simple in design, rugged in construction and economical to manufacture.

The invention will now be further described, by way of illustrative and non-limiting example, with reference to the accompanying drawings, in which:

Figure 1 is a block diagram showing a flame quality analyser embodying the invention;

Figure 2 is a side elevational view of a burner with burner flame in conjunction with two different fibre optic arrays which can be used alternatively or together in the analyser embodying the invention;

Figure 3 is a simplified elevational view of light-detector arrays used in conjunction with the fibre optic array;

Figure 4 is a graph showing the relative intensity of light from a burner flame plotted against the wavelength distribution of the light;

Figure 5 is a graph showing the voltage from a light-sensor in the form of a diode plotted against the individual diode of the array being measured or against time; and

Figure 6 is a block diagram showing the workings of a signal processing unit for calculating quality factors from detected light values.

A flame quality analyser embodying the invention and described hereinbelow begins with a recognition of the complexity of the combustion process and, accordingly, does not attempt to characterize the performance of a burner with a single number. Rather, it provides the operator with plots showing the distribution in the flame of two parameters known to be of fundamental importance, e.g. the temperature and the particle loading.

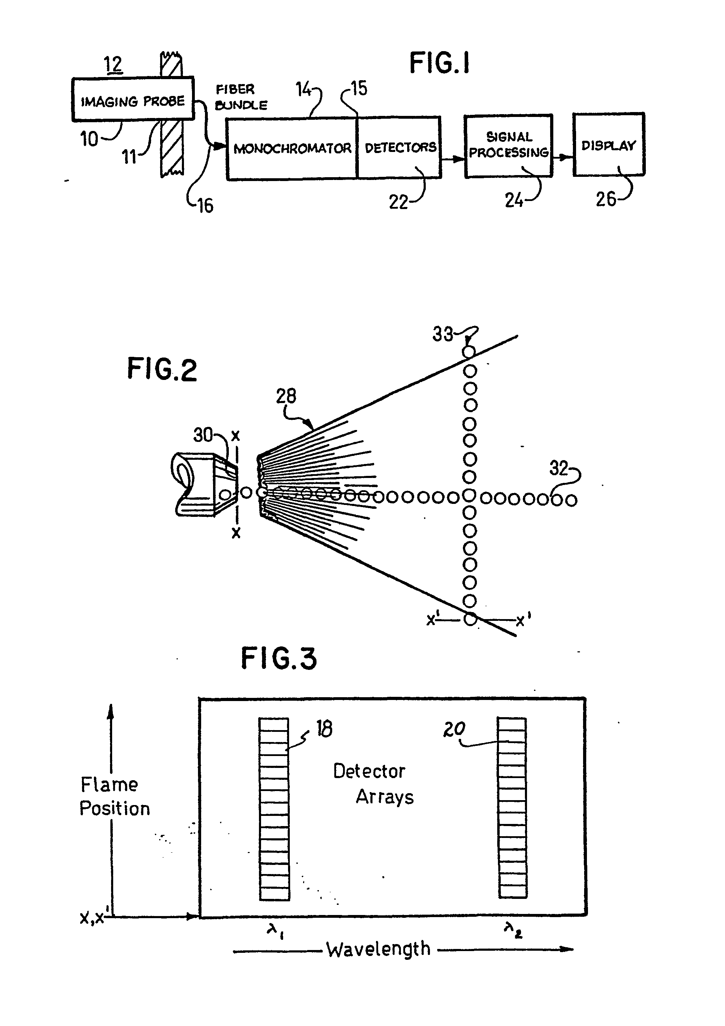

Figure 1 is a block diagram of the flame quality analyser. An imaging probe 10 that is inserted through a windbox of a furnace 12 focuses an image into a fibre optic array (Figure 2) that conveys the light over a fibre bundle 16 to a monochromator 14. The monochromator 14 separates the light into different wavelength components. Two self-scanned photodiode arrays 18 and 20 (Figure 3) are located at an output of the monochromator 14 in a detector 22 so that one measures the light intensity at one wavelength $\lambda 1$ while the other measures it at another wavelength $\lambda 2$. As is explained later, the scanning photodiodes measure irradiance at these wavelengths as a function of position across the flame image. The signals from the two detector arrays are manipulated by a signal processor (signal processing electronics) 24 to determine the temperature and particle loading profiles which are displayed in graphical form to the operator on a display 26. The probe 10 is of an air purged type to avoid contamination of the optics.

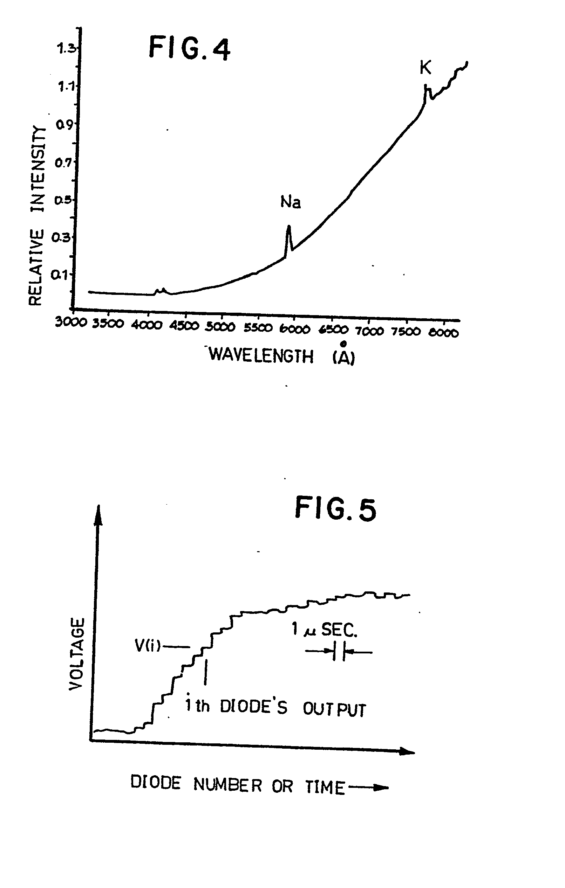

The spectral irradiance of a typical coal flame is shown in Figure 4, which is a graph of relative light intensity of the flame plotted against wavelength (in Angstroms). Over most of the wavelength range, the irradiance is due to emission from hot solid particles. However, peaks around 5892 Angstroms and 7676 Angstroms are due to emission from atomic sodium (Na) and atomic potassium (K), respectively.

The spectral irradiance at a wavelength $\lambda$ can be written

$$I(\lambda)=\varepsilon fW(\lambda,T) \qquad (1)$$

where:

$\varepsilon$ is the emissivity of the radiators,

f is the fraction of the emitted light that is transmitted through the unburned particles that lie between the radiators and the detector, and

$W(\lambda,T)$ is Planck's black body function.

For temperatures of interest, W can be approximated by the expression:

$$W(\lambda,T)=C_1 \cdot \lambda^{-5} \cdot e^{-C_2/\lambda T} \qquad (2)$$

where:

$C_1=3.7415\times10^{-16}$ W $\cdot$ m², and

$C_2=1.43879\times10^{-2}$ m $\cdot$ K.

For a cloud of hot coal particles, the effective emissivity will depend on the size, number, density, and composition of the coal. Furthermore, it will be a wavelength dependent function. However, for the sodium and potassium line radiation, the emissivity is equal to one. One can, therefore, express the irradiance at the sodium and potassium lines as:

$$I_{Na}=fW(\lambda_{Na},T) \qquad (3)$$

$$I_K=fW(\lambda_K,T) \qquad (4)$$

Because the unburned particles that prevent a fraction of the light from reaching the detector are large compared to the wavelength of interest, the factor f is the same for both $\lambda_{Na}$ and $\lambda_K$. Therefore, if one measures $I_{Na}$ and $I_K$, Equations (3) and (4) can be solved for the only two unknowns, T and f.

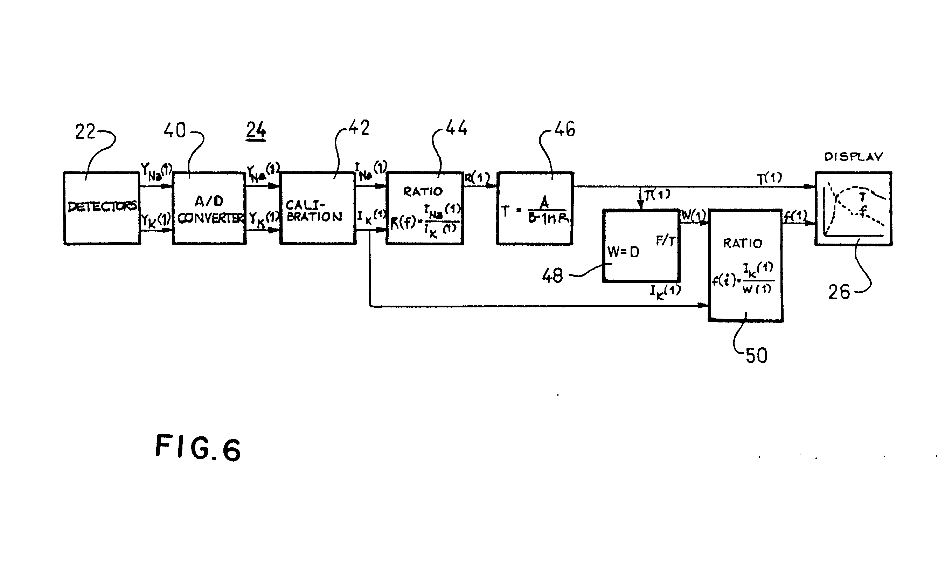

In the flame quality analyser, $I_{Na}$ and $I_K$ are measured as a function of position in the flame and present the operator with visual plots of both T and f as a function of position (see Figure 6).

The factor f depends on the total number of unburned particles along the line of sight and on their size and optical properties. Since f is directly related to what an observer perceives as the flame brightness, it can simply be called an index of particle loading and is presented to the operator. The temperature and index profiles of a "good" flame can be established once the equipment is set up and the values are correlated with other measures of performance, such as visual observation through a side door.

Turning now again to the equipment necessary to implement the measurements described above, the major components are the probe 10, monochromator 14, detectors 22, signal processor 24, and display 26 shown in Figure 1.

The probe 10 comprises an imaging objective assembly and an array of optical fibres enclosed in an air-purged housing. The probe 10 is mounted in an observation port 11 on the burner front. The tip of the probe 10 is inserted far enough into the windbox of the furnace 12 so that, as shown in Figure 2, it can provide a wide-angle image of the flame 28 that includes an edge X—X of a coal pipe 30. A linear array 32 of optical fibres is placed in the image plane and oriented with its light-receiving ends along (parallel to) the burner axis, as shown in Figure 2. Each fibre of the array 32 will, therefore, collect light from a specific location in the flame from the edge X—X outwardly. Since the ordering of the fibres is maintained from one end to the other, the distribution of brightness along the flame can be seen at the output end. Instead of visually observing this distribution, however, the fibre array 32 is aligned with an input slit of the monochromator 14.

The "white-light" brightness distribution at the input is spread by the monochromator 14 into its various color (wavelength) components. Therefore, at an output plane 15 of the monochromator 14, there is a two-dimensional brightness distribution with wavelength along the horizontal axis and flame position along the vertical.

The two self-scanned photodiode arrays 18, 20 are located at the monochromator output plane 15. The photodiode arrays 18, 20 are commercially available linear arrays of between 64 and 2048 independent photodetectors. The arrays 18, 20 are aligned vertically, so that each detector receives light from a specific location in the flame. In the horizontal plane one array is located to receive light from the sodium line radiation, while the other array receives the potassium line radiation. For this case, therefore, $\lambda_1 = \lambda_{Na}$ and $\lambda_2 = \lambda_K$.

In operation, all of the photodiodes of an array 18, 20 receive light simultaneously. Periodically, upon command, the diodes are read-out serially, giving a video type output as shown in Figure 5. Each step of the histogram corresponds to the output from a specific diode in the array, while the voltage at that step is a measure of the integrated light flux on that diode since the previous readout scan. It can be seen, then, that the output signals of the arrays will give the sodium and potassium line intensity distributions along the flame.

These signals are inputted to a small dedicated computer system in the signal processor 24 that calculates the particle loading index and temperature for each of N positions in the flame, N being the number of photodiodes in each array 18, 20. The calculated T and f distributions are then displayed for the operator on a cathode ray tube or other suitable readout device at the display 26.

The basic steps in the signal processing routine are shown in Figure 6. One begins with the diode array outputs, $V_{Na}(i)$ and $V_K(i)$, where (i) indicates the output from the ith diode in the array. This nomenclature is introduced to indicate that both $V_{Na}$ and $V_K$ really consist of a periodically updated string of N independent voltage measurements.

The first step in the signal processing is to convert the analog signal from the diode arrays 18, 20 in the detector 22 to digital form in an analog-to-digital converter 40. Next, each of the V signals is multiplied by a predetermined constant to calibrate the signals in terms of irradiance. This is done in a calibration unit 42. The irradiance signals are next ratioed in a unit 44, on an element-by-element basis, to produce a ratio signal

$$R(i) = I_{Na}(i)/I_K(i).$$

This ratio signal is then converted to temperature through the relationship:

$$T(i) = \frac{C_2(1/\lambda_{Na} - 1/\lambda_K)}{51n\lambda_K/\lambda_{Na} - 1nR(i)} \qquad (5)$$

which comes from solving Equations (3) and (4) for T. This takes place in a calculating unit 46.

The T(i) values are then sent to the display 26, but are used also to determine the function $W_K(i)$ from the expression:

$$W_K(i) = C_1 \cdot \lambda_K^{-5} \cdot e^{-C_2/\lambda_K T(i)} \qquad (6)$$

This is done in a calculating unit 48.

Having these values of $W_K(i)$, finally determines and sends to the display the value

$$f(i) = \frac{I_K(i)}{W_K(i)} \qquad (7)$$

This calculation, which takes place in a unit 50, completes the signal processing.

The foregoing signal processing can also take place for an alternative arrangement of the optical fibres which is also shown in Figure 2. According to this arrangement, the light-receiving ends of the fibres lie in an array 33 extending in a line perpendicular to the axis of the burner 30. The detector arrays of Figure 3 then are aligned with respect to the width direction of the flame beginning at the line X'—X', and continuing upwardly as shown in Figure 2. This optical array 33 can be used separately from the optical array 32 or in addition to the optical array 32 for analysing the width of the flame and also its characteristics across that width. As noted above, the detecting and processing steps are identical to those utilised with the optical array 32 so that further details will not be provided.

## Claims

1. A flame quality analyser comprising a fibre optic array (32, 33) including a plurality of optical fibres each having a light-receiving end for facing a flame from a burner, the light-receiving ends lying on a line in a selected direction with respect to an axis of the burner, and light-transducing means (14, 22) connected to the fibre optic array (32, 33) for transducing light from the flame, characterised in that the light-transducing means comprises a monochromator (14) for receiving the light from the flame transmitted by the fibre optic array (32, 33) and spreading the received light into its component wavelengths, and a detector (22) having a first and a second detector array (18, 20) of light sensors extending in a line for receiving a portion of the light at two discrete wavelengths to generate two sets of signals, each set of signals including an output of each light sensor.

2. An analyser according to claim 1, wherein said selected direction is parallel to the burner axis.

3. An analyser according to claim 1 or claim 2, wherein said selected direction is perpendicular to the burner axis.

4. An analyser according to claim 1, claim 2 or claim 3, wherein the light from the flame has sodium and potassium wavelength peaks, and wherein the first and second detector arrays (18, 20) are positioned at the sodium peak and at the potassium peak, respectively, on the light from the flame spread by the monochromator (14).

5. An analyser according to claim 1, claim 2 or claim 3, including signal processing means (24) connected to the light-transducing means (14, 22) for receiving the two sets of signals and for calculating from the two sets of signals a temperature and a particle index profile for the flame along said selected direction.

6. An analyser according to claim 5, wherein the light from the flame spread by the monochromator (14) has a sodium wavelength peak and a potassium wavelength peak, the first and second detector arrays (18, 20) are positioned to receive the sodium wavelength peak and the potassium wavelength peak, respectively, and the signal processing means (24) is operative to calculate the temperature profile according to the equation:

$$T(i)=\frac{C_2(1/\lambda_{Na}-1/\lambda_K)}{5n\lambda_K/\lambda_{Na}-nR(i)}$$

where

$C_2$ equals $1.43879\times10^{-2}$ m · K,

$\lambda_{Na}$ is the wavelength of the sodium peak,

$\lambda_K$ is the wavelength of the potassium peak,

R is equal to the ratio of irradiance for the sodium and potassium peaks, and

i refers to the ith set of light sensors in the first and second detector arrays (18, 20).

7. An analyser according to claim 6, wherein the signal processing means (24) includes a display (26) for plotting the value T(i) for each light sensor set.

8. An analyser according to claim 5, claim 6 or claim 7, wherein the signal processing means (24) includes means for calculating the particle index profile in said selected direction according to the relationship:

$$f(i)=\frac{I_K(i)}{W_K(i)}$$

where

$W_K(i)=C_1 \cdot \lambda_K^{-5} \cdot e^{-C_2/\lambda_K T(i)}$

$C_1$ equals $3.7415\times10^{-16}$ W · m², and

$I_K$ is equal to the irradiance of the potassium peak.

9. A method of analysing the quality of a flame, the method employing a fibre optic array (32, 33) which includes a plurality of optical fibres each having a light-receiving end positioned to face a flame from a burner, each light-receiving end lying on a line in a selected direction with respect to an axis of the burner, and the method being characterised by:

transmitting the light from the flame over the fibre optic array (32, 33) to a monochromator (14);

spreading the light in the monochromator (14) into its component wavelengths;

detecting the light at two separate and discrete wavelengths in the spread light to generate two sets of signals; and

processing the two sets of signals to calculate at least one property of the flame.

10. A method according to claim 9, including displaying the two sets of signals in the form of a graphic representation across the selected direction for the quality of the flame.

11. A method according to claim 9 or claim 10, including detecting the wavelength of light at a sodium peak and at a potassium peak of the spread light.

12. A method according to claim 11, including calculating a temperature distribution along the selected direction using the relationship:

$$T(i)=\frac{C_2(1/\lambda_{Na}-1/\lambda_K)}{5n\lambda_K/\lambda_{Na}-nR(i)}$$

where

$C_2$ equals $1.43879\times10^{-2}$ m · K,

$\lambda_{Na}$ is the wavelength of the sodium peak,

$\lambda_K$ is the wavelength of the potassium peak,

R is equal to the ratio of irradiance for the sodium and potassium peaks, and

i refers to the ith set of light sensors in first and second detector arrays (18, 20).

13. A method according to claim 11 or claim 12, including determining a particle index distribution across the selected direction according to the relationship:

$$f(i)=\frac{I_K(i)}{W_K(i)}$$

where

$W_K(i)=C_1 \cdot \lambda_K^{-5} \cdot e^{-C_2/\lambda_K T(i)}$

$C_1$ equals $3.7415\times10^{-16}$ W · m², and

$I_K$ is equal to the irradiance of the potassium peak.

14. A method according to any one of claims 9 to 13, wherein the light-receiving ends are positioned to lie in a selected direction parallel to the axis of the burner.

15. A method according to any one of claims 9 to 14, wherein the light-receiving ends are positioned to lie in a selected direction perpendicular to the axis of the burner.

**Patentansprüche**

1. Analysator für die Güte einer Flamme mit einer faseroptischen Anordnung (32, 33), welche eine Mehrzahl von optischen Fasern aufweist, von denen jede ein Lichtempfangsende hat, um diese auf eine Brennerflamme zu richten, wobei die Lichtempfangsenden entlang einer Linie in einer ausgewählten Richtung bezüglich der Achse des Brenners liegen, und mit einer Lichtumsetzungseinrichtung (14, 22), welche mit der faseroptischen Anordnung (32, 33) verbunden ist, um das Licht von der Flamme umzusetzen, dadurch gekennzeichnet, daß die Lichtumsetzungseinrichtung einen Monochromator (14) aufweist, um das von der faseroptischen Anordnung (32, 33) übertragene Licht aus der Flamme aufzunehmen und um das empfangenen Licht in seine Wellenlängenkomponenten aufzuspalten, und einen Detektor (22) aufweist, der eine erste und eine zweite Detektoranordnung (18, 20) von Lichtsensoren hat, die sich entlang einer Linie erstrecken, um einen Teil des Lichtes bei zwei verschiedenen Wellenlängen aufzunehmen, um zwei Sätze von Signalen zu erzeugen, wobei jeder Satz von Signalen einen Ausgabewert von jedem Lichtsensor enthält.

2. Analysator nach Anspruch 1, wobei die ausgewählte Richtung parallel zur Brennerachse verläuft.

3. Analysator nach Anspruch 1 oder 2, wobei die ausgewählte Richtung senkrecht zur Brennerachse verläuft.

4. Analysator nach Anspruch 1, 2 oder 3, wobei das Licht der Flamme Wellenlängenpeaks von Natrium und Kalium hat und wobei die ersten und zweiten Detektoranordnungen (18, 20) beim Natriumpeak bzw. beim Kaliumpeak des von der Flamme durch den Monochromator (14) aufgespaltenen Lichtes liegen.

5. Analysator nach Anspruch 1, 2 oder 3, einschließlich einer Signalverarbeitungseinrichtung (24), welche mit der Lichtumsetzungseinrichtung (14, 22) verbunden ist, um die beiden Sätze von Signalen zu empfangen und um aus den beiden Sätzen von Signalen ein Temperatur- und Teilchenindexprofil der Flamme entlang der ausgewählten Richtung zu berechnen.

6. Analysator nach Anspruch 5, wobei das durch den Monochromator (14) aufgespaltene Licht der Flamme einen Natriumwellenlängenpeak und einen Kaliumwellenlängenpeak hat, und wobei die ersten und zweiten Detektoranordnungen (18, 20) so angeordnet sind, daß sie den Natriumwellenlängenpeak bzw. den Kaliumwellenlängenpeak empfangen und wobei die Signalverarbeitungseinrichtung (24) so betreibbar ist, daß sie das Temperaturprofil gemäß der Gleichung:

$$T(i) = \frac{C_2(1/\lambda_{Na} - 1/\lambda_K)}{5n\lambda_K/\lambda_{Na} - nR(i)}$$

berechnet, wobei
$C_2$ gleich $1{,}43879 \times 10^{-2}$ m · K ist,
$\lambda_{Na}$ die Wellenlänge des Natriumpeaks ist,
$\lambda_K$ die Wellenlänge des Kaliumpeaks ist,
R gleich dem Verhältnis der Strahlungsstärke der Natrium- und Kaliumpeaks ist, und
i sich auf den i-ten Satz von Lichtsensoren in der ersten und zweiten Detektoranordnung (18, 20) bezieht.

7. Analysator nach Anspruch 6, wobei die Signalverarbeitungseinrichtung (24) eine Anzeige (26) aufweist, um den Wert T(i) für jeden Lichtsensorsatz aufzuzeichnen bzw. darzustellen.

8. Analysator nach Anspruch 5, 6 oder 7, wobei die Signalverarbeitungseinrichtung (24) eine Einrichtung zum Berechnen des Teilchenindexprofils in der ausgewählten Richtung gemäß der Beziehung:

$$f(i) = \frac{I_K(i)}{W_K(i)}$$

zu berechnen, wobei
$W_K(i) = C_1 \cdot \lambda_K^{-5} \cdot e^{-C_2/\lambda_K T(i)}$
$C_1$ gleich $3{,}7415 \times 10^{-16}$ W · m² ist und
$I_K$ gleich der Strahlungsstärke des Kaliumpeaks ist.

9. Verfahren zur Analyse der Güte eine Flamme, wobei das Verfahren eine faseroptische Anordnung (32, 33) verwendet, welche eine Mehrzahl von optischen Fasern aufweist, die jeweils ein Lichtempfangsende haben, welches so angeordnet ist, daß es auf die Flamme eines Brenners gerichtet ist, wobei jedes Lichtempfangsende auf einer Linie in einer ausgewählten Richtung bezüglich der Achse des Brenners liegt und wobei das Verfahren gekennzeichnet ist durch:
Übertragen des Lichtes von der Flamme über die faseroptische Anordnung (32, 33) zu einem Monochromator (14),
Aufspalten des Lichtes in dem Monochromator (14) in seine Wellenlängekomponenten,
Erfassen des Lichtes bei zwei getrennten diskreten Wellenlängen in dem aufgespaltenen Licht, um zwei Sätze von Signalen zu erzeugen, und
Verarbeiten der beiden Sätze von Signalen, um zumindest eine Eigenschaft der Flamme zu berechnen.

10. Verfahren nach Anspruch 9, einschließlich des Anzeigens der beiden Signalsätze in Form einer graphischen Darstellung entlang der ausgewählten Richtung für die Güte der Flamme.

11. Verfahren nach Anspruch 9 oder 10, einschließlich des Erfassens der Wellenlänge von Licht bei einem Natriumpeak und einen Kaliumpeak des aufgespaltenen Lichtes.

12. Verfahren nach Anspruch 11, einschließlich des Berechnens der Temperaturverteilung entlang der ausgewählten Richtung unter Verwendung der Beziehung:

$$T(i) = \frac{C_2(1/\lambda_{Na} - 1/\lambda_K)}{5n\lambda_K/\lambda_{Na} - nR(i)}$$

wobei
$C_2$ gleich $1{,}43879 \times 10^{-2}$ m · K ist,
$\lambda_{Na}$ die Wellenlänge des Natriumpeaks ist,
$\lambda_K$ die Wellenlänge des Kaliumpeaks ist,
R gleich dem Verhältnis der Strahlungsstärke der Natrium- und Kaliumpeaks ist, und
i sich auf den i-ten Satz von Lichtsensoren in der ersten und zweiten Detektoranordnung (18, 20) bezieht.

13. Verfahren nach Anspruch 11 oder 12, einschließlich des Bestimmens einer Teilchenindexverteilung entlang der ausgewählten Richtung gemäß der Beziehung:

$$f(i) = \frac{I_K(i)}{W_K(i)}$$

zu berechnen, wobei
$W_K(i) = C_1 \cdot \lambda_K^{-5} \cdot e^{-C_2/\lambda_K T(i)}$
$C_1$ gleich $3{,}7415 \times 10^{-16}$ W · m² ist und
$I_K$ gleich der Strahlungsstärke des Kaliumpeaks ist.

14. Verfahren nach einem der Ansprüche 9 bis 13, wobei die Lichtempfangsenden so angeordnet sind, daß sie in einer ausgewählten Richtung parallel zur Achse des Brenners liegen.

15. Verfahren nach einem der Ansprüche 9 bis 14, wobei die Lichtempfangsenden so angeordnet sind, daß sie entlang einer ausgewählten Richtung senkrecht zur Achse des Brenners liegen.

**Revendications**

1. Analyseur de la qualité d'une flamme comprenant un réseau de fibre optique (32, 33) comprenant une pluralité de fibres optiques chacun comportant une extrémité réceptrice de lumière pour se trouver en regard d'une flamme provenant d'un brûleur, les extrémités réceptrices de lumière reposant sur une ligne dans une direction choisie eu égard à un axe du brûleur et un moyen de transduction de lumière (14, 22) relié au réseau de fibre optique (32, 33) pour la transduction de la lumière provenant de la flamme, caractérisé en ce que le moyen de transduction de lumière comprend un monochromateur (14) pour recevoir de lumière provenant de la flamme transmise par le réseau de fibre optique (32, 33) et disperser la lumière reçu en ses longueurs d'onde constituantes et un détecteur (22) comportant un premier et un second détecteurs en mosaïque (18, 20) de capteurs de lumière s'étendant sur une ligne pour recevoir une partie de la lumière à deux longueurs d'onde discrètes pour produire deux ensembles de signaux, chaque ensemble de signaux comprenant une sortie de chaque capteur de lumière.

2. Analyseur selon la revendication 1, dans lequel ladite direction choisie est parallèle à l'axe du brûleur.

3. Analyseur selon la revendication 1 ou 2, dans lequel ladite direction choisie est perpendiculaire à l'axe du brûleur.

4. Analyseur selon la revendication 1, 2 ou 3, dans lequel la lumière provenant de la flamme présente des pics de longueur d'onde de sodium et de potassium et dans lequel les premier et deuxième détecteurs en mosaïque (18, 20) sont positionnés au niveau du pic de sodium et du pic de potassium, respectivement sur la lumière provenant de la flamme dispersée par le monochromateur (14).

5. Analyseur selon la revendication 1, 2 ou 3, comprenant un moyen de traitement de signal (24) relié au moyen de transduction de lumière (14, 22) pour recevoir les deux ensembles de signaux et pour calculer à partir de deux ensembles de signaux une température et un profil d'indice de particules pour la flamme suivant ladite direction choisie.

6. Analyseur selon la revendication 5, dans lequel la lumière provenant de la flamme dispersée par le monochromateur (14) a un pic de longueur d'onde de sodium et un pic de longueur d'onde de potassium, les premier et deuxième détecteurs en mosaïque (18, 20) étant positionnés pour recevoir le pic de longueur d'onde de sodium et le pic de longueur d'onde de potassium, respectivement et le moyen de traitement de signal (24) étant apte à calculer le profil de température suivant l'équation:

$$T(i)=\frac{C_2(1/\lambda_{Na}-1/\lambda_K)}{5n\lambda_K/\lambda_{Na}-nR(i)}$$

où

$C_2$ est égal à $1,43879\times10^{-2}$ m · K,
$\lambda_{Na}$ est la longueur d'onde du pic de sodium
$\lambda_K$ est la longueur d'onde du pic de potassium,
$R$ est égal au rapport de rayonnement pour les pics de sodium et de potassium, et
$i$ se réfère au $i^{ème}$ ensemble de capteurs de lumière dans les premier et deuxième détecteurs en mosaïque (18, 20).

7. Analyseur selon la revendication 6, dans lequel le moyen de traitement de signal (24) comprend un écran (26) pour représenter la valeur $T(i)$ pour chaque ensemble de capteur de lumière.

8. Analyseur selon la revendication 5, 6 ou 7, dans lequel le moyen de traitement de signal (24) comprend un moyen pour calculer le profil d'indice de particules dans ladite direction choisie en conformité avec la relation:

$$f(i)=\frac{I_K(i)}{W_K(i)}$$

où

$W_K(i)=C_1 \cdot \lambda_K^{-5} \cdot e^{-C_2/\lambda_K T(i)}$
$C_1$ est égal à $3,7415\times10^{-16}$ W · m$^2$, et
$I_K$ est égal au rayonnement du pic de potassium.

9. Procédé d'analyse de la qualité d'une flamme, le procédé employant un réseau de fibre optique (32, 33) qui comprend une pluralité de fibres optiques, chacune ayant une extrémité réceptrice de lumière positionnée pour se trouver en regard d'une flamme provenant d'un brûleur, chaque extrémité réceptrice de lumière reposant sur une ligne dans une direction choisie eu égard à l'axe du brûleur, et le procédé étant caractérisé par:

la transmission de la lumière provenant de la flamme sur le réseau de fibre optique (32, 33) vers un monochromateur (14);

la dispersion de la lumière dans le monochromateur (14) en ses longueurs d'onde constituantes;

la détection de la lumière en deux longueurs d'onde séparées et discrètes dans une lumière dispersée pour produire deux ensembles de signaux, et

le traitement de deux ensembles de signaux pour calculer au moins une propriété de la flamme.

10. Procédé selon la revendication 9, comprenant l'affichage de deux ensembles de signaux sous la forme d'une représentation graphique à travers la direction choisie pour la qualité de la flamme.

11. Un procédé selon la revendication 9 ou 10, comprenant la détection de la longueur d'onde de lumière au niveau d'un pic de sodium et d'un pic de potassium de la lumière dispersée.

12. Procédé selon la revendication 11, comprenant le calcul d'une distribution de température suivant la direction choisie en utilisant la relation:

$$T(i) = \frac{C_2(1/\lambda_{Na} - 1/\lambda_K)}{5n\lambda_K/\lambda_{Na} - nR(i)}$$

où

$C_2$ est égale à $1,43879 \times 10^{-2}$ m · K,

$\lambda_{Na}$ est la longueur d'onde du pic de sodium,

$\lambda_K$ est la longueur d'onde du pic de potassium,

R est égal au rapport de rayonnement pour les pics de sodium et de potassium, et

i renvoie au $i^{ème}$ ensemble de capteurs de lumière dans les premier et deuxième détecteurs en mosaïque (18, 20).

13. Procédé selon la revendication 11 ou 12, comprenant la détermination d'une distribution d'indice de particules à travers la direction choisie conformément à la relation:

$$f(i) = \frac{I_K(i)}{W_K(i)}$$

où

$W_K(i) = C_1 \cdot \lambda_K^{-5} \cdot e^{-C_2/\lambda_K T(I)}$

$C_1$ est égal à $3,7415 \times 10^{-16}$ W · m², et

$I_K$ est égal au rayonnement du pic de potassium.

14. Procédé selon l'une quelconque des revendications 9 à 13, dans lequel les extrémités réceptrices de lumière sont positionnées pour demeurer dans une direction choisie parallèlement à l'axe du brûleur.

15. Procédé selon l'une quelconque des revendications 9 à 14, dans lequel les extrémités réceptrices de lumière sont positionnées pour demeurer dans une direction choisie perpendiculaire à l'axe du brûleur.

# FIG.1

IMAGING PROBE 12

FIBER BUNDLE

MONOCHROMATOR 14 15

DETECTORS

SIGNAL PROCESSING

DISPLAY

10  11  16  22  24  26

# FIG.2

33  28  30  32

X  X

x'  x'

# FIG.3

Flame Position

18  20

Detector Arrays

X,x'

$\lambda_1$  $\lambda_2$

Wavelength

FIG.4

RELATIVE INTENSITY

K

Na

WAVELENGTH (Å)

FIG.5

VOLTAGE

V(i)

1 μ SEC.

ith DIODE'S OUTPUT

DIODE NUMBER OR TIME →

EP 0 168 235 B1

22 — 40 — 24 — 42 — 44 — 46

DISPLAY

DETECTORS →$Y_{Na}(1)$, $Y_K(1)$→ A/D CONVERTER →$Y_{Na}(1)$, $Y_K(1)$→ CALI-BRATION →$I_{Na}(1)$, $I_K(1)$→ RATIO $R(f) = \dfrac{I_{Na}(1)}{I_K(1)}$ →$R(1)$→ $T = \dfrac{A}{B - \ln R}$ →$T(1)$→

$T(1)$ → W=D  F/T  →$W(1)$→ RATIO $f(t) = \dfrac{I_K(1)}{W(1)}$ →$f(1)$→

48

$I_K(1)$

50

26

T, f

FIG. 6